# EUROPEAN PATENT APPLICATION

(11) **EP 4 742 549 A1**
(43) Date of publication of application: **13.05.2026**
(21) Application number: 24862988.3
(22) Date of filing: 04.07.2024
(51) Int. Cl.: H04B 1/401, H04B 1/52, H04B 1/7163, H04W 84/12, H04W 88/06

(54) **ELECTRONIC DEVICE FOR PERFORMING COMMUNICATION ON BASIS OF PLURALITY OF COMMUNICATION SCHEMES, AND OPERATION METHOD THEREFOR**

(30) Priority: 05.09.2023 KR 20230117959; 20.11.2023 KR 20230160779
(71) Applicant: Samsung Electronics Co., Ltd., Suwon-si, Gyeonggi-do 16677 (KR)
(72) Inventor: MIN, Hyunkee, Suwon-si, Gyeonggi-do 16677 (KR); KANG, Moonseok, Suwon-si, Gyeonggi-do 16677 (KR); KIM, Seonghwan, Suwon-si, Gyeonggi-do 16677 (KR); SHIN, Jiho, Suwon-si, Gyeonggi-do 16677 (KR); LEE, Eonji, Suwon-si, Gyeonggi-do 16677 (KR); HONG, Ingwon, Suwon-si, Gyeonggi-do 16677 (KR)
(74) Representative: Gulde & Partner
(86) International application number: PCT/KR2024/009513
(87) International publication number: WO 2025/053405

(57) **Abstract**

An embodiment of the disclosure relates to a device and a method for performing communication based on multiple communication methods in an electronic device. The electronic device may include a first communication circuit, a second communication circuit, a processor, and a memory configured to store instructions to identify an operation channel for wireless LAN communication performed by the first communication circuit, identify an operation channel for UWB communication performed by the second communication circuit, and control the first communication circuit to deactivate, based on the performance of the UWB communication, a transmission operation in the wireless LAN communication using at least one antenna among multiple first antennas in case that the UWB communication is activated and that the operation channels for the wireless LAN communication and the UWB communication are different. Other embodiments may be also possible.

## Description

### [Technical Field]

An embodiment of the disclosure relates to an electronic device for performing communication based on multiple communication methods and a method for operating the same.

### [Background Art]

An electronic device can communicate with an external electronic device by using wireless communication technology. For example, the wireless communication technology may include at least one of ultra-wideband (UWB) communication, wireless LAN (e.g., Wi-Fi) communication, long-term evolution (LTE) communication, 5G communication (or new radio (NR) communication), or Bluetooth communication (or Bluetooth low energy (BLE)).

The above-described information may be provided as related art for the purpose of facilitating the understanding of the disclosure. No claim or determination is made as to whether the foregoing is applicable as prior art related to the disclosure.

### [Disclosure of Invention]

### [Solution to Problem]

A frequency band used for UWB communication and a frequency band used for wireless LAN communication may partially overlap or be adjacent. When an electronic device simultaneously performs UWB communication and wireless LAN communication using overlapping or adjacent frequency bands, a signal of the UWB communication and a signal of the wireless LAN communication may interfere with each other, causing communication quality to deteriorate or a communication failure to occur.

Embodiments of the disclosure provides a device and a method for performing communication based on multiple communication methods in an electronic device.

Technical tasks to be achieved herein are not limited to the above-described technical tasks. Other technical tasks, which have not been described above, may be clearly understood by those skilled in the art, to which the disclosure belongs, through the description below.

According to one embodiment, an electronic device may include a first communication circuit configured to perform wireless LAN communication via multiple first antennas, a second communication circuit configured to perform ultra-wideband (UWB) communication via multiple second antennas, at least one processor operatively connected to the first communication circuit and the second communication circuit, and a memory operatively connected to the at least one processor. According to one embodiment, the memory may be configured to store instructions which, when executed by the at least one processor, cause the electronic device to identify an operation channel for the wireless LAN communication performed by the first communication circuit. According to one embodiment, the memory may be configured to store instructions which, when executed by the at least one processor, cause the electronic device to identify an operation channel for the UWB communication performed by the second communication circuit. According to one embodiment, the memory may be configured to store instructions which, when executed by the at least one processor, cause the electronic device to control the first communication circuit to deactivate, based on performing the UWB communication, a transmission operation in the wireless LAN communication using at least one antenna among the multiple first antennas in case that the UWB communication is activated and that the operation channels for the wireless LAN communication and the UWB communication are different.

According to one embodiment, a method for operating an electronic device may include identifying an operation channel for wireless LAN communication. According to an embodiment, the method for operating the electronic device may include identifying an operation channel for UWB communication. According to an embodiment, the method for operating the electronic device may include deactivating, based on performing the UWB communication, a transmission operation in the wireless LAN communication using at least one antenna among multiple first antennas related to the wireless LAN communication in case that the UWB communication is activated and that the operation channels for the wireless LAN communication and the UWB communication are different.

According to one embodiment, a non-transitory computer-readable storage medium (or a computer program product) configured to store one or more programs may be described. According to one embodiment, the one or more programs may include instructions which, when executed by a processor of an electronic device, include identifying an operation channel for wireless LAN communication, identifying an operation channel for UWB communication, and deactivating, based on performing the UWB communication, a transmission operation in the wireless LAN communication using at least one antenna among multiple first antennas related to the wireless LAN communication in case that the UWB communication is activated and that the operation channels for the wireless LAN communication and the UWB communication are different.

According to an exemplary embodiment of the disclosure, when channels of a first communication method (e.g., a wireless LAN communication method) and a second communication method (e.g., a UWB communication method) performed simultaneously are adjacent, and when the first communication method and the second communication method use adjacent antennas, the electronic device may control a transmission operation of the first communication method to prevent and/or reduce performance degradation of the first communication method and/or the second communication method.

In addition, there may be a variety of other effects that are identified directly or indirectly herein.

Effects that can be obtained from the disclosure are not limited to the above-described effects, and other effects, which have not been described, will be clearly understood by those skilled in the art to which the disclosure belongs from the following description.

### [Brief Description of Drawings]

In describing the drawings, identical or similar reference numerals may be used to designate identical or similar elements.
FIG. 1 is a block diagram of an electronic device in a network environment according to one embodiment.
FIG. 2 is a front perspective view of an electronic device according to one embodiment.
FIG. 3 is a block diagram of an electronic device supporting multiple communication methods according to one embodiment.
FIG. 4A illustrates an example of an antenna structure related to multiple communication methods in an electronic device according to one embodiment.
FIG. 4B illustrates an example of an antenna structure related to multiple communication methods in an electronic device according to one embodiment.
FIG. 5 is a flowchart of performing multiple communications in an electronic device according to one embodiment.
FIG. 6 is a flowchart of coexistence of multiple communications in an electronic device according to one embodiment.
FIG. 7 is a flowchart of performing multiple communications based on a first coexistence method in an electronic device according to one embodiment.
FIG. 8 illustrates an example of performing multiple communications based on the first coexistence method in an electronic device according to one embodiment.
FIG. 9 is a flowchart of performing multiple communications based on a second coexistence method in an electronic device according to one embodiment.
FIG. 10 illustrates an example of performing multiple communications based on the second coexistence method in an electronic device according to one embodiment.
FIG. 11 is a flowchart of performing multiple communications based on a third coexistence method in an electronic device according to one embodiment.
FIG. 12 illustrates an example of performing multiple communications based on the third coexistence method in an electronic device according to one embodiment.
FIG. 13 illustrates an example of performing multiple communications based on the third coexistence method in an electronic device according to one embodiment.

### [Mode for the Invention]

Hereinafter, various embodiments are described in detail with reference to the accompanying drawings.

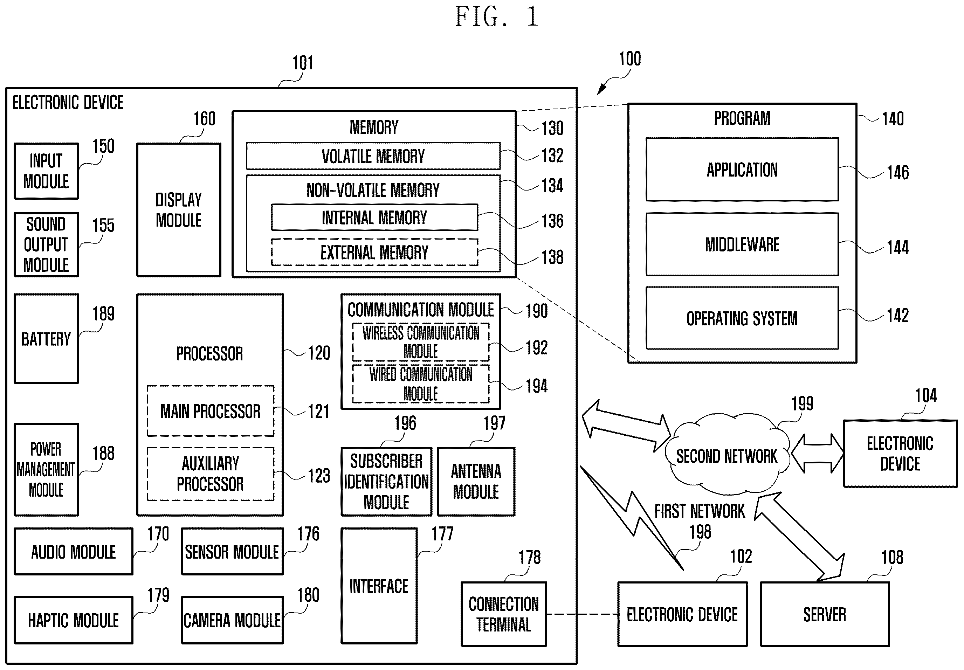

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

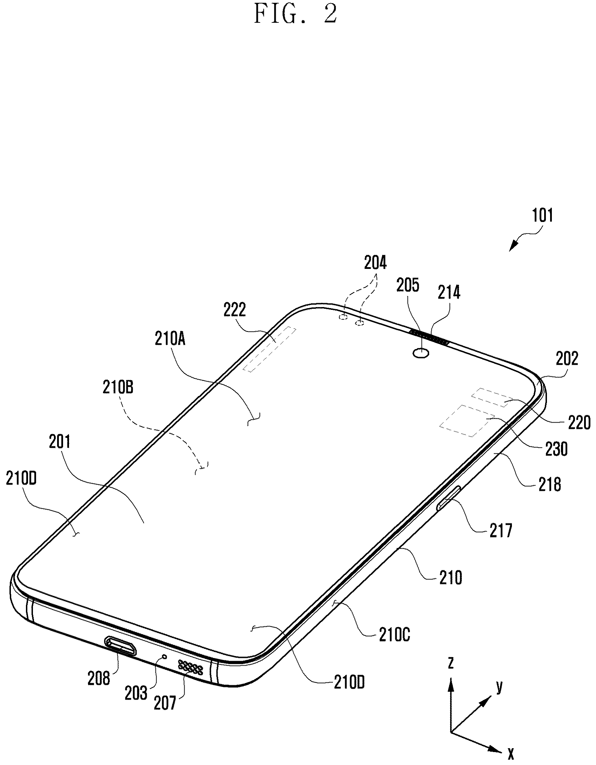

FIG. 2 is a front perspective view of an electronic device according to one embodiment. In one example, an electronic device 101 in FIG. 2 may be at least partially similar to the electronic device 101 in FIG. 1, or may further include other embodiments of the electronic device.

According to one embodiment, referring to FIG. 2, the electronic device 101 may include a housing 210 that includes a first surface (or front surface) 210A, a second surface (or rear surface) 210B, and a side surface 210C that surrounds a space between the first surface 210A and the second surface 210B. According to one embodiment, the housing 210 may refer to a structure that forms some of the first surface 210A, the second surface 210B, and the side surface 210C in FIG. 2. For example, the first surface 210A may be formed by a front plate 202 that is at least partially substantially transparent (e.g., a polymer plate, or a glass plate including various coating layers). The second surface 210B may be formed by a substantially opaque rear plate. In one example, the rear plate may be formed of coated or colored glass, ceramic, polymer, metal (e.g., aluminum, stainless steel (STS), or magnesium), or a combination of at least two of the above-described materials.

For example, the side surface 210C may be formed by a side bezel structure (or "a lateral member") 218 that is coupled to the front plate 202 and the rear plate and includes metal and/or polymer. In one example, the rear plate and side bezel structure 218 may be integrally formed and include the same material (e.g., a metal material such as aluminum).

For example, the front plate 202 may include a first region 210D curved and seamlessly extending from the first surface 210A toward the rear plate at each of both ends of the long edge of the front plate 202.

According to one embodiment, the electronic device 101 may include at least one of a display 201 (e.g., a first display), an input device 203, a sound output device 207 and 214, a sensor module 204, a camera module 205, a key input device 217, an indicator (not shown), or a connector 208. In an embodiment, in one embodiment, in the electronic device 101, at least one (e.g., the key input device 217 or the indicator) of the elements may be omitted, or other elements may be included.

For example, the display 201 may be exposed (or visible) through a substantial portion of the front plate 202. For example, at least a portion of the display 201 may be exposed through the front plate 202 forming the first surface 210A and the first region 210D of the side surface 210C. For example, the display 201 may be coupled to or disposed adjacent to a touch sensing circuit, a pressure sensor capable of measuring the intensity (pressure) of a touch, and/or a digitizer capable of detecting a magnetic stylus pen. For example, at least a portion of the sensor module 204, and/or at least a portion of the key input device 217 may be disposed in the first region 210D.

According to one embodiment, the input device 203 may include a microphone. For example, the input device 203 may include multiple microphones disposed to sense the direction of sound. Sound output devices 207 and 214 may include speakers. The sound output devices 207 and 214 may include an external speaker 207 and a receiver 214 for calls. For example, the input device 203, the sound output devices 207 and 214, and the connectors 208 may be disposed in an inner space of the electronic device 101 and exposed to the external environment through at least one hole formed in the housing 210. For example, the hole formed in the housing 210 may be shared for the input device 203 and the sound output devices 207 and 214. For example, the sound output devices 207 and 214 may include a speaker (e.g., a piezo speaker) operating without any hole formed in housing 210.

According to one embodiment, the sensor module 204 may generate an electrical signal or a data value corresponding to an internal operation state of the electronic device 101, or an external environmental state. For example, the sensor module 204 may include a first sensor module 204 (e.g., a proximity sensor) and/or a second sensor module (not shown) (e.g., a fingerprint sensor) disposed on the first surface 210A of the housing 210, and/or a third sensor module (e.g., an HRM sensor) disposed in the second surface 210B of the housing 210. The fingerprint sensor may be disposed on the first surface 210A of the housing 210. The fingerprint sensor (e.g., an ultrasonic or optical fingerprint sensor) may be disposed under the display 201 of the first surface 210A. The electronic device 101 may further include at least one of a sensor module not shown, such as a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor 204.

According to one embodiment, the camera module 205 may include a first camera module 205 disposed on the first surface 210A of the electronic device 101. For example, the electronic device 101 may include a flash and/or a second camera module disposed on the second surface 210B. The camera modules 205 may include one or multiple lenses, an image sensor, and/or an image signal processor. The flash may include a light-emitting diode or a xenon lamp. For example, two or more lenses (wide-angle and telephoto lenses) and image sensors may be disposed on one surface of the electronic device 101.

According to one embodiment, the key input devices 217 may be disposed on the side surface 210C of the housing 210. According to one embodiment, the electronic device 101 may implement some or all of the key input devices 217 in other forms, such as soft keys, on the display 201. According to one embodiment, the key input device 217 may be implemented using a pressure sensor included in the display 201.

According to one embodiment, the connector 208 may transmit and/or receive power and/or data (e.g., audio data) to and/or from an external electronic device. For example, the connector 208 (e.g., a USB connector or an IF module (an interface connector port module)) may be accommodated in a connector hole.

According to one embodiment, the camera module 205, the sensor module 204, or the indicator may be disposed to be exposed through the display 201. For example, the camera module 205, the sensor module 204, or the indicator may be disposed in the inner space of the electronic device 101 so as to be exposed to the external environment through an opening of the display 201 perforated to the front plate 202. In another embodiment, some sensor modules 204 may be arranged to perform functions thereof in the inner space of the electronic device without being visually exposed through the front plate 202. For example, the region of the display 201 that faces the sensor modules may not require a perforated opening.

According to one embodiment, the electronic device 101 may include, in the inner space of the housing 210, a first antenna (or a first antenna structure) 220, a second antenna (or a second antenna structure) 222, and a third antenna (or a third antenna structure) 230. For example, the first antenna 220 and the second antenna 222 may support a frequency band (e.g., an about 2.4 GHz band, an about 5 GHz band, and/or an about 6 GHz band) for first communication (e.g., wireless LAN communication). For example, the third antenna 230 may include multiple antennas which support a frequency band for second communication (e.g., UWB communication). For example, the first antenna 220 and the third antenna 230 may be disposed adjacent to each other. In one example, the adjacently disposed antennas may include antennas that are physically disposed within a designated distance from each other to interfere with each other.

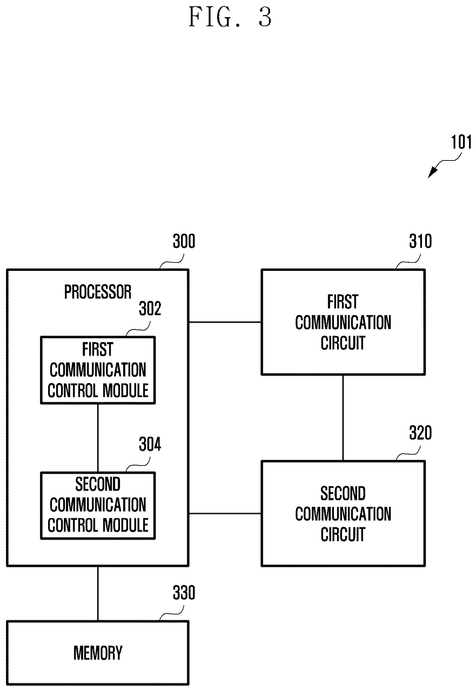

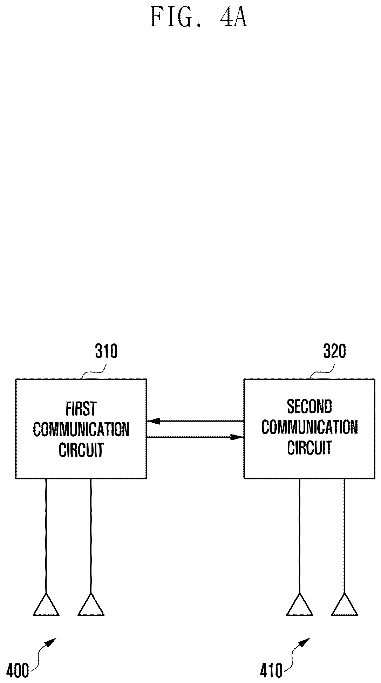

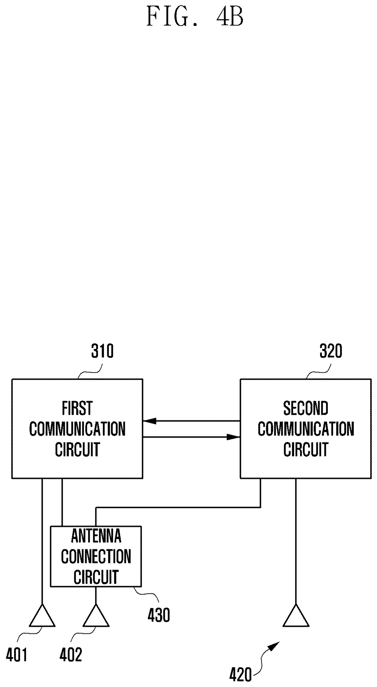

FIG. 3 is a block diagram of an electronic device supporting multiple communication methods according to one embodiment. FIG. 4A illustrates an example of an antenna structure related to multiple communication methods in an electronic device according to one embodiment. FIG. 4B illustrates an example of an antenna structure related to multiple communication methods in an electronic device according to one embodiment. In one example, an electronic device 101 in FIG. 3, 4A, or 4B may be at least partially similar to the electronic device 101 in FIG. 1 or 2, or may further include other embodiments of the electronic device.

According to one embodiment, referring to FIGS. 3, 4A, and 4B, the electronic device 101 may include at least one of a processor (e.g., including processing circuitry) 300, a first communication circuit (or first communication circuitry) 310, a second communication circuit (or second communication circuitry) 320, or a memory 330. According to one embodiment, the processor 300 may be substantially the same as the processor 120 (e.g., the application processor) in FIG. 1, or may be included in the processor 120. At least one of the first communication circuit 310 or the second communication circuit 320 may be substantially the same as the wireless communication module 192 in FIG. 1, or may be included in the wireless communication module 192. The memory 330 may be substantially the same as the memory 130 in FIG. 1, or may be included in the memory 130. The processor 300 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to one embodiment, the processor 300 may control at least one of the first communication circuit 310, the second communication circuit 320, or the memory 330 to which the processor 300 is operatively, functionally, and/or electrically connected.

According to one embodiment, the first communication circuit 310 may perform, based on a first communication method, at least one of transmitting or receiving at least one of a signal or data to or from an external electronic device (e.g., the electronic device 102 or 104 in FIG. 1). For example, the first communication method may include a wireless LAN communication method (e.g., Wi-Fi) that supports a designated frequency band.

According to one embodiment, the second communication circuit 320 may perform, based on a second communication method, at least one of transmitting or receiving at least one of a signal or data to or from an external electronic device (e.g., the electronic device 102 or 104 in FIG. 1). For example, the second communication method may include an ultra-wideband (UWB) communication method that supports at least a portion of a designated frequency band.

According to one embodiment, the first communication circuit 310 and the second communication circuit 320 may perform wireless communication via multiple different antennas, as illustrated in FIG. 4A. For example, the first communication circuit 310 may perform at least one of transmitting or receiving at least one of a signal or data to or from an external electronic device (e.g., the electronic device 102 or 104 in FIG. 1) based on the first communication method via multiple antennas 400 (e.g., the first antenna 220 and the second antenna 222 in FIG. 2). For example, the second communication circuit 320 may perform at least one of transmitting or receiving at least one of a signal or data with an external electronic device (e.g., the electronic device 102 or 104 in FIG. 1) based on the second communication method via multiple antennas 410 (e.g., the third antenna 230 in FIG. 2). For example, some of the multiple antennas 400 related to the first communication method and the multiple antennas 410 related to the second communication method may be disposed adjacent to each other. In one example, the adjacently disposed antennas may include antennas that are physically disposed within a designated distance from each other to interfere with each other. In one example, the designated distance may include a minimum distance at which the antennas are determined not to interfere with each other.

According to one embodiment, as illustrated in FIG. 4B, the first communication circuit 310 and the second communication circuit 320 may share at least one antenna to perform wireless communication. For example, the first communication circuit 310 may perform at least one of transmitting or receiving at least one of a signal or data to or from an external electronic device (e.g., the electronic device 102 or 104 in FIG. 1) based on the first communication method via at least one of a first antenna 401 (e.g., the first antenna 220 in FIG. 2) or a second antenna 402 (e.g., the second antenna 222 in FIG. 2). In one example, the second antenna 402 may be connected to the first communication circuit 310 via an antenna connection circuit (or antenna connection circuitry) 430. In one example, the antenna connection circuit 430 may control the connection of the second antenna 402 to at least one of the first communication circuit 310 or the second communication circuit 320. In one example, the antenna connection circuit 430 may include a switch (e.g., single pole double throw (SPDT)) or a divider. For example, the second communication circuit 320 may perform at least one of transmitting or receiving at least one of a signal or data to or from an external electronic device (e.g., the electronic device 102 or 104 in FIG. 1) based on the second communication method via at least one of the at least one antenna 420 (e.g., the third antenna 230 in FIG. 2) or the second antenna 402. In one example, the second antenna 402 may be connected to the second communication circuit 320 via the antenna connection circuit 430.

According to one embodiment, the first communication circuit 310 and the second communication circuit 320 may perform at least one of transmitting or receiving at least one of a signal or data. For example, the first communication circuit 310 and the second communication circuit 320 may communicate with each other by using a general-purpose input and output (GPIO). For example, the first communication circuit 310 and the second communication circuit 320 may communicate with each other by using a universal asynchronous receiver/transmitter (UART).

According to one embodiment, the processor 300 may control the first communication circuit 310 to perform wireless communications based on the first communication method. For example, the processor 300 (e.g., a first communication control module 302) may control the first communication circuit 310 to perform wireless communication based on the first communication method when the occurrence of an event related to the first communication method is sensed. In one example, the event related to the first communication method may occur based on at least one of execution of an application program or a function related to the first communication method, reception of a user input (e.g., a touch input or a speech input), reception of a control signal, or detection of a gesture input.

According to one embodiment, the processor 300 may control the second communication circuit 320 to perform wireless communications based on the second communication method. For example, the processor 300 (e.g., a second communication control module 304) may control the second communication circuit 320 to perform wireless communication based on the second communication method when the occurrence of an event related to the second communication method is sensed. In one example, the event related to the second communication method may occur based on at least one of execution of an application program or a function related to the second communication method, reception of a user input (e.g., a touch input or a speech input), reception of a control signal, or detection of a gesture input.

According to one embodiment, the first communication control module 302 may control the first communication circuit 310 to perform first communication of the first communication method in the processor 300. For example, the first communication control module 302 may be configured as a hardware module or a software module. According to one embodiment, the second communication control module 304 may control the second communication circuit 320 to perform second communication of the second communication method in the processor 300. For example, the second communication control module 304 may be configured as a hardware module or a software module. For example, the first communication control module 302 and the second communication control module 304 may be configured in the same chip, or may be configured in different separate chips.

According to one embodiment, the first communication control module 302 and the second communication control module 304 may exchange information via a service interface or a software interface. For example, the first communication control module 302 and the second communication control module 304 may exchange information by adding a function to a source file related to at least one of the first communication method or the second communication method or by calling a specific service.

According to one embodiment, when it is determined that the first communication of the first communication method and the second communication of the second communication method are performed simultaneously, the processor 300 may determine a coexistence method related to the first communication method and the second communication method. For example, when the second communication of the second communication method is performed (or when the second communication is activated), the second communication control module 304 may transmit information related to the second communication to the first communication control module 302. In one example, when it is determined that the first communication control module 302 is performing that the first communication of the first communication method, the second communication control module 304 may transmit information related to the second communication to the first communication control module 302. In one example, the information related to the second communication may include at least one of an operation channel, an operation duration, or an operation interval for performing the second communication of the second communication method.

For example, when the first communication control module 302 receives the information related to the second communication from the second communication control module 304 during performing the first communication of the first communication method, the first communication control module 302 may select a coexistence method (or a wireless LAN control method) based on the information related to the first communication and the second communication. In one example, the information related to the first communication may include an operation channel for performing the first communication of the first communication method.

For example, to perform the first communication of the first communication method, the first communication control module 302 may determine whether the second communication control module 304 is performing the second communication of the second communication method. When it is determined that the second communication is being performed, the first communication control module 302 may select a coexistence method (or a wireless LAN control method) based on the information related to the first communication and the second communication.

For example, when a designated first coexistence communication condition (or a first wireless LAN control condition) is determined to be satisfied based on operation channels for the first communication and the second communication, the first communication control module 302 may select a first coexistence method (or a first wireless LAN control method). In one example, a state satisfying the designated first coexistence communication condition may include a state in which the operation channel for the first communication and the operation channel for the second communication overlap. In one example, a state that does not satisfy the designated first coexistence communication condition may include a state in which the operation channel for the first communication and the operation channel for the second communication do not overlap.

For example, when a designated second coexistence communication condition (or a second wireless LAN control condition) is determined to be satisfied based on operation channels for the first communication and the second communication, the first communication control module 302 may select a second coexistence method (or a second wireless LAN control method) or a third coexistence method (or a third wireless LAN control method). In one example, a state satisfying the designated second coexistence communication condition may include a state in which the operation channel for the first communication is adjacent to the operation channel for the second communication, and an antenna related to the first communication method is adjacent to an antenna related to the second communication method. In one example, a state that does not satisfy the designated second coexistence communication condition may include a state where the operation channel for the first communication is not adjacent to the operation channel for the second communication, or where the antenna related to the first communication method is not adjacent to the antenna related to the second communication method are not adjacent. In one example, adjacent channels may include channels that have been determined to interfere with each other. In one example, the adjacent antennas may include antennas that are physically disposed within a designated distance from each other to interfere with each other.

For example, when it is determined that the designated second coexistence communication condition (or the second wireless LAN control condition) is satisfied, the first communication control module 302 may select the second coexistence method (or the second wireless LAN control method) or the third coexistence method (or the third wireless LAN control method) based on information related to the second communication. In one example, the second coexistence method (or the second wireless LAN control method) may be selected when the operation time of the second communication is less than or equal to a designated first reference time. In one example, the third coexistence method (or the third wireless LAN control method) may be selected when the operation time of the second communication exceeds the designated first reference time. In one example, the operation time of the second communication may be identified based on at least one of an operation duration or an operation interval of the second communication. In one example, the designated first reference time may be fixed or changed to a reference time that has been set for selecting the second coexistence method or the third coexistence method.

According to one embodiment, the processor 300 may transmit information related to a coexistence method (or a wireless LAN control method), determined based on the information related to the first communication and the second communication, to at least one of the first communication circuit 310 or the second communication circuit 320. For example, the first communication control module 302 may transmit the information related to the coexistence method to the first communication circuit 310. The second communication control module 304 may transmit coexistence indication information to the second communication circuit 320 when the first communication control module 302 has accepted the use of the coexistence method. In one example, the information related to the coexistence method may include coexistence method identification information and coexistence method activation information. In one example, the coexistence indication information may include information related to the initiation of coexistence of the first communication and the second communication.

For example, the second communication circuit 320 may transmit, based on the reception of the coexistence indication information, information related to performing the second communication to the first communication circuit 310 at a time point that precedes a start time point of the second communication (e.g., ranging) of the second communication method by a designated second reference time. In one example, the information related to performing the second communication may include a first GPIO which has been set to a first value (e.g., "high").

For example, the first communication circuit 310 may determine that a coexistence function is activated based on the reception of the coexistence indication information. The first communication circuit 310 may perform an operation corresponding to a coexistence method, based on receiving the information related to performing the second communication of the second communication method while the coexistence function is activated. In one example, the first communication circuit 310 may perform the operation corresponding to the coexistence method within a designated third reference time from a time point of receiving the information related to performing the second communication. In one example, the designated third reference time may include a reference time indicating a start time point of performing the second communication in the second communication circuit 320. In one example, the first communication circuit 310 may deactivate (e.g., disable) (or stop) transmission and reception operations of the first communication based on the first coexistence method (or the first wireless LAN control method). In one example, the first communication circuit 310 may deactivate (or stop) a transmission operation of the first communication based on the second coexistence method. A reception operation of the first communication may be performed (or maintained) while the transmission operation of the first communication is deactivated based on the second coexistence method (or the second wireless LAN control method). In one example, the first communication circuit 310 may deactivate (or stop) transmission operations of at least some of multiple antennas related to the first communication method, based on the third coexistence method (or the third wireless LAN control method). While a transmission operation of at least one antenna is deactivated based on the third coexistence method, the first communication circuit 310 may perform (or maintain) at least one of the reception operation of the first communication via the multiple antennas or the transmission operation of the remaining antennas, other than the at least one antenna, among the multiple antennas. In one example, at least some antennas may include an antenna, which is adjacent to at least one antenna related to the second communication method, among the multiple antennas related to the first communication method.

For example, the first communication circuit 310 may transmit information related to performing the operation corresponding to a coexistence method (or a wireless LAN control method) to the second communication circuit 320. In one example, the information related to performing the operation corresponding to the coexistence method may include a second GPIO that has been set to a second value (e.g., "low").

For example, the second communication circuit 320 may perform the second communication (e.g., ranging) based on the transmission of information related to performing the second communication of the second communication method. In one example, the second communication circuit 320 may perform the second communication when the designated third reference time has elapsed from the time point of transmission of the information related to performing the second communication. In one example, the second communication circuit 320 may perform the second communication based on receiving, from the first communication circuit 310, the information related to performing the operation corresponding to the coexistence method.

For example, when an operation duration of the second communication (e.g., ranging) expires, the second communication circuit 320 may transmit, to the first communication circuit 310, information related to terminating the performance of the second communication of the second communication method. In one example, the information related to terminating the performance of the second communication may include a first GPIO that has been set to a second value (e.g., "low").

For example, the first communication circuit 310 may terminate the operation corresponding to the coexistence method (or the wireless LAN control method) based on receiving the information related to terminating the performance of the second communication. In an example, the first communication circuit 310 may resume transmission and reception operations of the first communication based on the first coexistence method. In one example, the first communication circuit 310 may resume the transmission operation of the first communication based on the second coexistence method. In one example, the first communication circuit 310 may resume, based on the third coexistence method, transmission operations of at least some of the multiple antennas related to the first communication.

For example, when a coexistence method (or a wireless LAN control method) is activated, the first communication circuit 310 may selectively perform an operation corresponding to the coexistence method based on the performance of the second communication in the second communication circuit 320.

According to one embodiment, the processor 300 may control the first communication circuit 310 to operate based on a coexistence method (or a wireless LAN control method) determined based on information related to the first communication and the second communication. For example, the processor 300 (e.g., the first communication control module 302) may transmit information related to performing a coexistence method to the first communication circuit 310. The first communication circuit 310 may perform an operation corresponding to the coexistence method based on the information related to performing the coexistence method received from the processor 300 (e.g., the first communication control module 302). For example, when a coexistence method is activated, the first communication circuit 310 may continuously perform an operation corresponding to the coexistence method.

According to one embodiment, the processor 300 may control at least one of the first communication circuit 310 or the second communication circuit 320 such that a coexistence method is deactivated. For example, when the second communication of the second communication method is terminated, the second communication control module 304 may transmit information related to the termination of the second communication method to the first communication control module 302. The first communication control module 302 may determine that the coexistence method is deactivated based on the information related to the termination of the second communication method. The first communication control module 302 may transmit information related to the deactivation of the coexistence method to the first communication circuit 310. The first communication control module 302 may transmit the information related to the deactivation of the coexistence method to the second communication circuit 320 via the second communication control module 304.

For example, the second communication circuit 320 may deactivate (or stop) transmission of information related to performing or terminating the performance of the second communication based on the information related to the deactivation of the coexistence method. For example, the first communication circuit 310 may deactivate (or stop) performing an operation corresponding to the coexistence method based on the information related to the deactivation of the coexistence method.

According to one embodiment, the memory 330 may store various types of data used by at least one element (e.g., the processor 300, the first communication circuit 310, or the second communication circuit 320) of the electronic device 101. For example, the memory 330 may store various instructions that may be executed via the processor 300.

According to one embodiment, the coexistence methods related to the first communication method and the second communication method may be determined not only by the first communication control module 302, but also by the processor 300, the second communication control module 304, or a separate circuit.

According to one embodiment, an electronic device (e.g., the electronic device 101 in FIG. 1, 2, or 3) may include a first communication circuit (e.g., the wireless communication module 192 in FIG. 1 or the first communication circuit 310 in FIG. 3) configured to perform wireless LAN communication via multiple first antennas (e.g., the multiple antennas 400 in FIG. 4A or 4B), a second communication circuit (e.g., the wireless communication module 192 in FIG. 1 or the second communication circuit 320 in FIG. 3) configured to perform ultra-wideband (UWB) communication via multiple second antennas (e.g., the multiple antennas 410 in FIG. 4A and 4B), at least one processor (e.g., the processor 120 in FIG. 1 or the processor 300 in FIG. 3), including processing circuitry, operatively connected to the first communication circuit and the second communication circuit, and a memory (e.g., the memory 130 in FIG. 1 or the memory 330 in FIG. 3) operatively connected to the at least one processor. According to one embodiment, the memory may store instructions which, when executed by the at least one processor individually or collectively, cause the electronic device to identify an operation channel for the wireless LAN communication performed by the first communication circuit. According to one embodiment, the memory may store instructions which, when executed by the at least one processor, cause the electronic device to identify an operation channel for the UWB communication performed by the second communication circuit. According to one embodiment, the memory may store instructions which, when executed by the at least one processor, cause the electronic device to control the first communication circuit to deactivate, based on performing the UWB communication, a transmission operation in the wireless LAN communication using at least one antenna among the multiple first antennas based on the UWB communication being activated and that the operation channels for the wireless LAN communication and the UWB communication being different.

According to an embodiment, the transmission operation in the wireless LAN communication using the at least one antenna among the multiple first antennas may be deactivated while a reception operation in the wireless LAN communication using the at least one antenna among the multiple first antennas is activated.

According to one embodiment, the multiple first antennas may include a first wireless LAN antenna and a second wireless LAN antenna disposed such that the distance between the second wireless LAN antenna and a UWB antenna being used for the UWB communication among the multiple second antennas is greater than the distance between the first wireless LAN antenna and the UWB antenna.

According to one embodiment, the at least one antenna in which the transmission operation is deactivated may correspond to the first wireless LAN antenna.

According to an embodiment, at least one remaining antenna, other than the at least one antenna, among the multiple first antennas may maintain a transmission operation in the wireless LAN communication while the transmission operation in the wireless LAN communication using the at least one antenna is deactivated.

According to one embodiment, the at least one remaining antenna in which the transmission operation is maintained may correspond to the second wireless LAN antenna.

According to one embodiment, the memory may store instructions which, when executed by the at least one processor, individually and/or collectively, cause the electronic device to transmit information related to controlling the wireless LAN communication to the first communication circuit based on the UWB communication being activated and that the operation channels for the wireless LAN communication and the UWB communication being different.

According to an embodiment, the first communication circuit may determine that the second communication circuit is performing the UWB communication, based on information related to the performance the UWB communication being received from the second communication circuit while the information related to controlling the wireless LAN communication is received.

According to an embodiment, the first communication circuit may resume the transmission operation in the wireless LAN communication using the at least one antenna among the multiple first antennas, based on information related to operation termination of the UWB communication being received from the second communication circuit while the transmission operation in the wireless LAN communication using the at least one antenna is deactivated.

According to one embodiment, the first communication circuit may receive information related to an operation of the UWB communication from the second communication circuit via a general-purpose input and output (GPIO).

According to one embodiment, the memory may store instructions which, when executed by the at least one processor, individually and/or collectively, cause the electronic device to control the first communication circuit to resume the transmission operation using the at least one antenna among of the multiple first antennas based on the UWB communication being terminated.

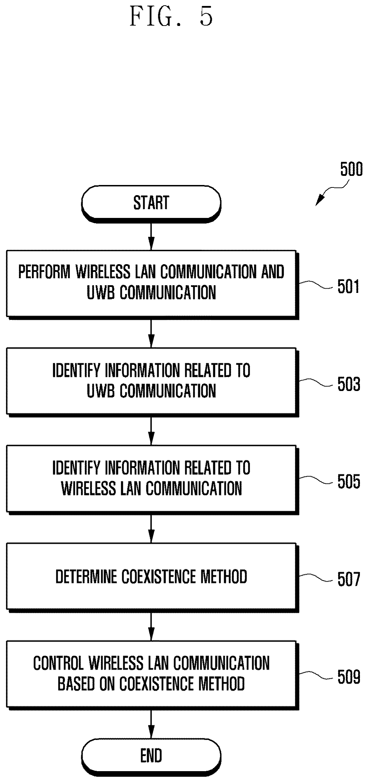

FIG. 5 is a flowchart 500 of performing multiple communications in an electronic device according to one embodiment. In the following embodiments, operations may each be performed sequentially, but are not necessarily performed sequentially. For example, the order of the operations may be changed, and at least two operations may be performed in parallel. In one example, an electronic device 101 in FIG. 5 may be the electronic device 101 in FIG. 1, 2, or 3.

According to one embodiment, referring to FIG. 5, an electronic device (e.g., the electronic device 101 in FIG. 1, 2, or 3) or a processor (e.g., the processor 120 in FIG. 1 or the processor 300 in FIG. 3) may, in operation 501, perform a wireless LAN communication (e.g., first communication of a first communication method) and a UWB communication (e.g., second communication of a second communication method). For example, when the occurrence of an event related to the first communication method is sensed, the processor 300 (e.g., the first communication control module 302) may control the first communication circuit 310 to perform wireless communication based on the first communication method. In one example, the event related to the first communication method may occur based on at least one of execution of an application program or a function related to the first communication method, reception of a user input (e.g., a touch input or a speech input), reception of a control signal, or detection of a gesture input. For example, when the occurrence of an event related to the second communication method is sensed, the processor 300 (e.g., the second communication control module 304) may control the second communication circuit 320 to perform wireless communication based on the second communication method. In one example, the second communication circuit 320 may activate the second communication (e.g., the UWB communication) based on the control of the processor 300 (e.g., the second communication control module 304). In one example, the event related to the second communication method may occur based on at least one of execution of an application program or a function related to the second communication method, reception of a user input (e.g., a touch input or a speech input), reception of a control signal, or detection of a gesture input.

According to one embodiment, in operation 503, the electronic device (e.g., the electronic device 101) or the processor (e.g., the processor 120 or 300) may identify information related to the UWB communication. For example, the second communication control module 304 may transmit information related to the second communication to the first communication control module 302 when performing the second communication of the second communication method. In an example, the information related to the second communication may include at least one of an operation channel, an operation duration, or an operation interval for performing the second communication of the second communication method. In one example, the second communication control module 304 may determine the information related to the second communication or obtain (or receive) the information from the second communication circuit 320.

According to one embodiment, in operation 505, the electronic device (e.g., the electronic device 101) or the processor (e.g., the processor 120 or 300) may identify information related to the wireless LAN communication. In one example, the information related to the first communication may include an operation channel for performing the first communication of the first communication method.

According to one embodiment, at operation 507, the electronic device (e.g., the electronic device 101) or the processor (e.g., the processor 120 or 300) may determine a coexistence method (or a wireless control method) based on the information related to the wireless LAN communication and the information related to the UWB communication. For example, when a designated first coexistence communication condition (or a first wireless LAN control condition) is determined to be satisfied based on an operation channel for the wireless LAN communication and an operation channel for the UWB communication, the first communication control module 302 may select a first coexistence method (or a first wireless LAN control method). In one example, a state satisfying the designated first coexistence communication condition may include a state in which the operation channel for the wireless LAN communication and the operation channel for the UWB communication overlap. In one example, a state that does not satisfy the designated first coexistence communication condition may include a state in which the operation channel for the wireless LAN communication and the operation channel for the UWB communication do not overlap.

For example, when a designated second coexistence communication condition (or a second wireless LAN control condition) is determined to be satisfied based on an operation channel for the wireless LAN communication and an operation channel for the UWB communication, the first communication control module 302 may select a second coexistence method (or a second wireless LAN control method) or a third coexistence method (or a third wireless LAN control method). In one example, a state satisfying the designated second coexistence communication condition may include a state in which the operation channel for the wireless LAN communication is adjacent to the operation channel for the UWB communication, and an antenna related to the wireless LAN communication method is adjacent to an antenna related to the UWB communication method. In one example, a state that does not satisfy the designated second coexistence communication condition may include a state where the operation channel for the wireless LAN communication is not adjacent to the operation channel for the UWB communication, or where the antenna related to the wireless LAN communication method is not adjacent to the antenna related to the UWB communication method are not adjacent. In one example, adjacent channels may include channels that have been determined to interfere with each other. In one example, the adjacent antennas may include antennas that are physically disposed within a designated distance from each other to interfere with each other.

For example, the first communication control module 302 may select the second coexistence method (or the second wireless LAN control method) or the third coexistence method (or the third wireless LAN control method) based on an operation time of the UWB communication. In one example, the second coexistence method may be selected when the operation time of the UWB communication is less than or equal to a designated first reference time. In one example, the third coexistence method may be selected when the operation time of the UWB communication exceeds the designated first reference time. In one example, the operation time of the UWB communication may be identified based on at least one of an operation duration or an operation interval of the UWB communication.

According to one embodiment, in operation 509, the electronic device (e.g., the electronic device 101) or the processor (e.g., the processor 120 or 300) may control the wireless LAN communication based on the coexistence method (or the wireless LAN control method). For example, the first communication control module 302 may transmit information related to the coexistence method to the first communication circuit 310. The second communication control module 304 may transmit coexistence indication information to the second communication circuit 320 when the first communication control module 302 has accepted the use of the coexistence method. In one example, the information related to the coexistence method may include coexistence method identification information and coexistence method activation information.

For example, the second communication circuit 320 may transmit, based on receiving the coexistence indication information, information related to performing the UWB communication to the first communication circuit 310 at a time point that precedes a start point of the UWB communication (e.g., ranging) by a designated second reference time.

For example, the first communication circuit 310 may perform an operation corresponding to the coexistence method based on receiving information related to performing the UWB communication.

For example, when the first coexistence method is selected, the first communication circuit 310 may deactivate (or stop) transmission and reception operations of the wireless LAN communication while the UWB communication is being performed.

For example, when the second coexistence method is selected, the first communication circuit 310 may deactivate (or stop) the transmission operation of the wireless LAN communication while the UWB communication is being performed. In one example, the reception operation of the wireless LAN communication may be performed (or maintained) while the transmission operation of the wireless LAN communication is deactivated.

For example, when the third coexistence method is selected, the first communication circuit 310 may deactivate (or stop) transmission operations of the wireless LAN communication in at least some of the antennas of multiple antennas related to the wireless LAN communication method. In one example, reception operations of the wireless LAN communication may be performed (or maintained) while the transmission operations of the wireless LAN communication in the at least some of the antennas is disabled. In one example, transmission operations of the remaining antennas, other than the at least some antennas, among the multiple antennas may be performed (or maintained) while the transmission operations of the wireless LAN communication in the at least some of the antennas is deactivated.

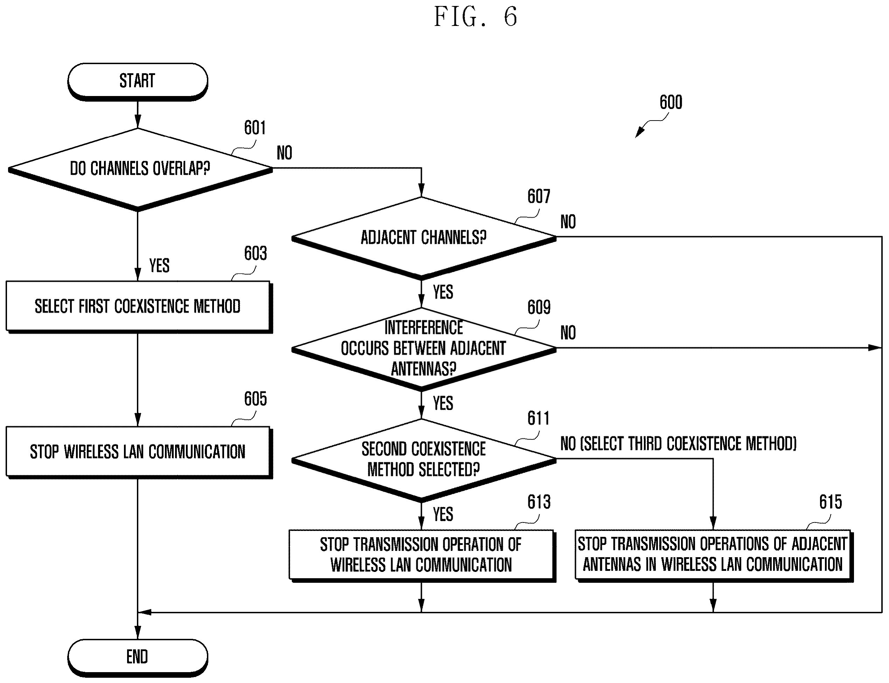

FIG. 6 is a flowchart 600 of coexistence of multiple communications in an electronic device according to one embodiment. In one example, at least some operations in FIG. 6 may include detailed operations of operation 507 and operation 509 in FIG. 5. In the following embodiments, operations may each be performed sequentially, but are not necessarily performed sequentially. For example, the order of the operations may be changed, and at least two operations may be performed in parallel. In one example, an electronic device 101 in FIG. 6 may be the electronic device 101 in FIG. 1, 2, or 3.

According to one embodiment, referring to FIG. 6, when information related to wireless LAN communication and UWB communication is obtained (e.g., operations 503 and 505 in FIG. 5), an electronic device (e.g., the electronic device 101 in FIG. 1, 2, or 3) or a processor (e.g., the processor 120 in FIG. 1 or the processor 300 in FIG. 3) may identify, in operation 601, whether an operation channel for the wireless LAN communication and an operation channel for the UWB communication overlap. For example, when the information related to the UWB communication is obtained from the second communication control module 304, the first communication control module 302 may identify whether the operation channel for the wireless LAN communication and the operation channel for the UWB communication overlap at least partially.

According to one embodiment, the electronic device (e.g., the electronic device 101) or the processor (e.g., the processor 120 or 300) may select a first coexistence method (or a first wireless LAN control method) as a coexistence method for the wireless LAN communication and the UWB communication at operation 603 when the operation channel for the wireless LAN communication and the operation channel for the UWB communication overlap at least partially (e.g., "Yes" in operation 601).

According to one embodiment, in operation 605, the electronic device (e.g., the electronic device 101) or the processor (e.g., the processor 120 or 300) may deactivate (or stop) a transmission operation and a reception operation of the wireless LAN communication during a performance duration of the UWB communication based on the first coexistence method (or the first wireless LAN control method). For example, the processor 300 (or the first communication control module 302) may set a power management bit of a quality of service (QoS)-related frame (e.g., a QoS null frame) to a third value (e.g., "1") and transmit the QoS-related frame to an access point (AP). The first communication circuit 310 may stop a transmission operation and a reception operation related to a wireless LAN by switching to a low-power mode (e.g., a power-save mode) based on the transmission of the QoS-related frame including the power management bit set to the third value. For example, the processor 300 (or the first communication control module 302) may use a clear to send to self (CTS2S) frame to stop the transmission operation and the reception operation related to the wireless LAN.

According to one embodiment, when the operation channel for the wireless LAN communication and the operation channel for the UWB communication do not overlap (e.g., "no" in operation 601),the electronic device 101 (e.g., the electronic device 101) or the processor (e.g., the processor 120 or 300) may identify, in operation 607, whether the operation channel for the wireless LAN communication is adjacent to the operation channel for the UWB communication. For example, when the operation channel for the wireless LAN communication is included in a first frequency band (e.g., a about 5 GHz band) and the operation channel for the UWB communication is included in a second frequency band (e.g., a about 6 GHz band), the processor 300 (or the first communication control module 302) may determine that the operation channel for the wireless LAN communication is adjacent to the operation channel for the UWB communication. In one example, the adjacent channels may include channels that have been determined to interfere with each other.

According to one embodiment, the electronic device 101 (e.g., the electronic device 101) or the processor (e.g., the processor 120 or 300) may terminate an embodiment for coexistence of multiple communications when it is determined that the operation channel for the wireless LAN communication is not adjacent to the operation channel for the UWB communication (e.g., "No" in operation 607). For example, when the operation channel for the wireless LAN communication and the operation channel for the UWB communication neither overlap nor are adjacent, the processor 300 (or the first communication control module 302) may determine that interference between the wireless LAN communication and the UWB communication does not occur. The processor 300 (or the first communication control module 302) may determine not to use the coexistence method of the wireless LAN communication and the UWB communication based on the determination that interference between the wireless LAN communication and the UWB communication does not occur.

According to one embodiment, when it is determined that the operation channel for the wireless LAN communication and the operation channel for the UWB communication are adjacent (e.g., "Yes" in operation 607), the electronic device 101 (e.g., the electronic device 101) or the processor (e.g., the processor 120 or 300) may identify, in operation 609, whether an antenna related to the wireless LAN communication is adjacent to an antenna related to the UWB communication are adjacent. For example, the processor 300 (or the first communication control module 302) may identify whether an antenna adjacent to at least one antenna activated to perform the UWB communication is present among multiple antennas activated to perform the wireless LAN communication. In one example, the adjacent antennas may include antennas that are physically disposed within a designated distance from each other to interfere with each other.

According to one embodiment, the electronic device 101 (e.g., the electronic device 101) or the processor (e.g., the processor 120 or 300) may terminate an embodiment for coexistence of the multiple communications when it is determined that the antenna related to the wireless LAN communication is not adjacent to the antenna related to the UWB communication (e.g., "No" in operation 609). For example, when it is determined that the antenna related to the wireless LAN communication is not adjacent to the antenna related to the UWB communication, the processor 300 (or the first communication control module 302) may determine that interference between the wireless LAN communication and the UWB communication does not occur. The processor 300 (or the first communication control module 302) may determine not to use the coexistence method of the wireless LAN communication and the UWB communication based on the determination that the interference between the wireless LAN communication and the UWB communication does not occur.

According to one embodiment, when it is determined that the antenna related to the wireless LAN communication is adjacent to the antenna related to the UWB communication (e.g., "Yes" in operation 609), the electronic device (e.g., the electronic device 101) or the processor (e.g., the processor 120 or 300) may identify, in operation 611, whether a second coexistence method (or a second wireless LAN control method) is selected as a coexistence method for the wireless LAN communication and the UWB communication. For example, when it is determined that the operation channels for the wireless LAN communication and the UWB communication are adjacent to each other and that the antennas related to the wireless LAN communication is adjacent to the antennas related to the UWB communication, the processor 300 (or the first communication control module 302) may identify (or estimate) an operation time of the UWB communication based on information related to the UWB communication (e.g., an operation duration and/or an operation interval of the UWB communication). For example, the processor 300 (or the first communication control module 302) may select the second coexistence method (or the second wireless LAN control method) when the operation time of the UWB communication is less than or equal to a designated first reference time. In one example, the second coexistence method (or the second wireless LAN control method) may be selected when the operation time of the UWB communication is less than or equal to the designated first reference time because it is determined that deactivating the transmission operation of a first communication method during the operation time of the UWB communication has relatively little effect on the degradation of the communication quality of the first communication method. For example, the processor 300 (or the first communication control module 302) may select a third coexistence method (or a third wireless LAN control method) when the operation time of the UWB communication exceeds the designated first reference time. In one example, the third coexistence method (or the third wireless LAN control method) may be selected when the operation time of the UWB communication exceeds the designated first reference time because it is determined that deactivating the transmission operation of the first communication method during the operation time of the UWB communication has a relatively large effect on the degradation of the communication quality of the first communication method.

According to one embodiment, when the second coexistence method (or the second wireless LAN control method) is selected (e.g., "Yes" in operation 611), in operation 613, the electronic device (e.g., the electronic device 101) or the processor (e.g., the processor 120 or 300) may deactivate (or stop), based on the second coexistence method (or the second wireless LAN control method), the transmission operation of the wireless LAN communication during a performance duration of the UWB communication. For example, the processor 300 (or the first communication control module 302) may control the first communication circuit 310 to deactivate (or stop), based on the second coexistence method, the transmission operation of the wireless LAN communication during the performance duration of the UWB communication. The first communication circuit 310 may perform (or maintain) the reception operation of the wireless LAN communication while the transmission operation of the wireless LAN communication is deactivated.

According to one embodiment, when the second coexistence method is not selected (e.g., "No" in operation 611), in operation 615, the electronic device (e.g., the electronic device 101) or the processor (e.g., the processor 120 or 300) may deactivate (or stop), based on the third coexistence method (or the third wireless LAN control method), transmission operations of at least some antenna among multiple antennas related to the wireless LAN communication during the performance duration of the UWB communication. For example, the processor 300 (or the first communication control module 302) may control the first communication circuit 310 to deactivate (or stop), based on the third coexistence method (or the third wireless LAN control method), the transmission operations of the at least some antennas among the multiple antennas related to the wireless LAN communication during the performance duration of the UWB communication. The first communication circuit 310 may perform (or maintain) reception operations of the wireless LAN communication while the transmission operations of the wireless LAN communication using the at least some antennas are deactivated. The first communication circuit 310 may perform (or maintain) transmission operations of the remaining antennas among the multiple antennas related to the wireless LAN communication while the transmission operations of the wireless LAN communication using the at least some antennas are deactivated. In one example, the at least some antennas may include an antenna, which is adjacent to at least one antenna related to a second communication method (e.g., the UWB communication method), among multiple antennas related to the first communication method (e.g., the wireless LAN communication method).

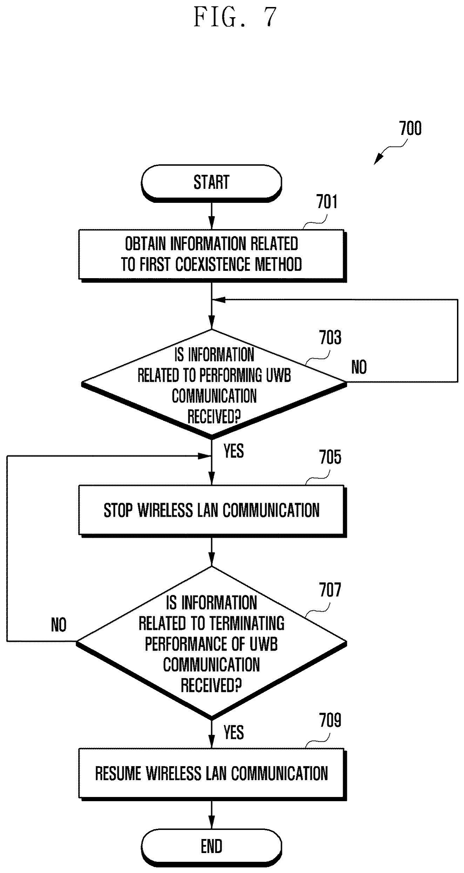

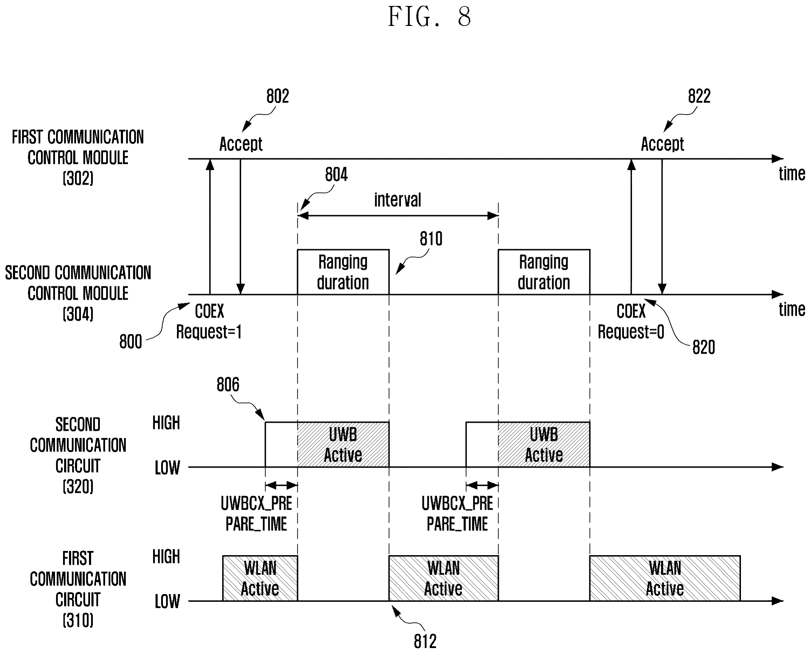

FIG. 7 is a flowchart 700 of performing multiple communications based on a first coexistence method in an electronic device according to one embodiment. In one example, at least some operations in FIG. 7 may include a detailed operation of operation 509 in FIG. 5 or operation 605 in FIG. 6. In the following embodiments, operations may each be performed sequentially, but are not necessarily performed sequentially. For example, the order of the operations may be changed, and at least two operations may be performed in parallel. In one example, the electronic device 101 in FIG. 7 may be the electronic device 101 in FIG. 1, 2, or 3. In one example, at least some operations in FIG. 7 may be described with reference to FIG. 8. FIG. 8 illustrates an example of performing multiple communications based on the first coexistence method in an electronic device according to one embodiment.

According to one embodiment, referring to FIGS. 7 and 8, an electronic device (e.g., the electronic device 101 in FIG. 1, 2, or 3) or a first communication circuit (e.g., the wireless communication module 192 in FIG. 1 or the first communication circuit 310 in FIG. 3) may obtain information related to a first coexistence method (or a first wireless LAN control method) in operation 701. For example, the second communication control module 304 may transmit a coexistence request signal (e.g., coex request = 1) 800 to the first communication control module 302 when performing UWB communication. The first communication control module 302 may determine whether to perform a coexistence operation of wireless LAN communication and the UWB communication based on the coexistence request signal received from the second communication control module 304. When it is determined that the coexistence operation of the wireless LAN communication and the UWB communication is to be performed, the first communication control module 302 may transmit coexistence acceptance information (e.g., accept) 802 to the second communication control module 304. In one example, the coexistence request signal may include information related to the UWB communication.

For example, when it is determined that the coexistence operation of the wireless LAN communication and the UWB communication is to be performed, the first communication control module 302 may select a coexistence method of the wireless LAN communication and the UWB communication based on information related to the wireless LAN communication and the UWB communication. In one example, the first communication control module 302 may select a first coexistence method when an operation channel for the wireless LAN communication and an operation channel for the UWB communication at least partially overlap.

For example, the first communication control module 302 may transmit information related to the coexistence method (e.g., the first coexistence method) of the wireless LAN communication and the UWB communication to the first communication circuit 310. For example, the second communication control module 304 may transmit coexistence indication information to the second communication circuit 320 based on the coexistence acceptance information (e.g., accept) 802.

According to one embodiment, in operation 703, the electronic device (e.g., the electronic device 101) or the first communication circuit (e.g., the wireless communication module 192 or the first communication circuit 310) may identify whether information related to performing the UWB communication is received. In one example, the information related to performing the UWB communication may include a first GPIO that has been set to a first value (e.g., "high") in FIG. 8.

According to one embodiment, when the information related to performing the UWB communication is not received (e.g., "No" in operation 703), the electronic device (e.g., the electronic device 101) or the first communication circuit (e.g., the wireless communication module 192 or the first communication circuit 310) may identify, in operation 703, whether the information related to performing the UWB communication is received. For example, when it is determined that the second communication circuit 320 is performing UWB communication, the first communication circuit 310 may continuously or periodically identify whether the information related to performing the UWB communication is received.

According to one embodiment, when the information related to performing the UWB communication is received (e.g., "Yes" in operation 703), the electronic device (e.g., the electronic device 101) or the first communication circuit (e.g., the wireless communication module 192 or the first communication circuit 310) may stop (or deactivate) the wireless LAN communication in operation 705. For example, the first communication circuit 310 may identify, based on receiving information related to the first coexistence method, whether the information related to performing the UWB communication is received from the second communication circuit 320 during the performance of the wireless LAN communication.

For example, the second communication circuit 320 may transmit, based on reception of the coexistence indication information, the information related to performing the UWB communication to the first communication circuit 310 at a time point 806 that precedes a start time point 804 of the UWB communication (e.g., ranging) by a designated second reference time (e.g., UWBCX_PRERATE_TIME). In one example, the information related to performing the UWB communication may include the first GPIO that has been set to the first value (e.g., "high").

For example, when the information related to performing the UWB communication is received during the performance of the wireless LAN communication, the first communication circuit 310 may stop (or deactivate), based on the first coexistence method, a transmission operation and a reception operation of the wireless LAN communication. In one example, the first communication circuit 310 may perform an operation corresponding to the first coexistence method within a designated third reference time from the time point of receiving the information related to performing the UWB communication. In one example, the designated third reference time may include a time equal to, or shorter than, the designated second reference time, which is a reference time indicating a start time point of performing the UWB communication in the second communication circuit 320.

For example, the first communication circuit 310 may transmit information related to performing the operation corresponding to the first coexistence method to the second communication circuit 320. In one example, the information related to performing the operation corresponding to the first coexistence method may include a second GPIO that has been set to a second value (e.g., "low").

According to one embodiment, in operation 707, the electronic device (e.g., the electronic device 101) or the first communication circuit (e.g., the wireless communication module 192 or the first communication circuit 310) may identify whether information related to terminating the performance of the UWB communication is received.

According to one embodiment, when the information related to terminating the performance of the UWB communication is not received (e.g., "No" in operation 707), the electronic device (e.g., the electronic device 101) or the first communication circuit (e.g., the wireless communication module 192 or the first communication circuit 310) may maintain the stopping (or deactivating) of the wireless LAN communication in operation 705. For example, when the information related to terminating the performance of the UWB communication is not received while the wireless LAN communication is stopped based on the first coexistence method, the first communication circuit 310 may determine that the UWB communication is in progress and may maintain the stopped state of the wireless LAN communication.

According to one embodiment, when the information related to terminating the performance of the UWB communication is received (e.g., "Yes" in operation 707), the electronic device (e.g., the electronic device 101) or the first communication circuit (e.g., the wireless communication module 192 or the first communication circuit 310) may resume the wireless LAN communication in operation 709. For example, the second communication circuit 320 may perform the UWB communication (e.g., ranging) based on the transmission of the information related to performing the UWB communication. In one example, the UWB communication may be performed when the designated third reference time elapses from the time point of transmitting the information related to performing the UWB communication. In one example, the UWB communication may be performed based on receiving the information related to performing the operation corresponding to the coexistence method from the first communication circuit 310.

For example, the second communication circuit 320 may transmit the information related to terminating the performance of the UWB communication (e.g., ranging) to the first communication circuit 310 when an operation duration of the UWB communication (e.g., ranging) expires (810). In one example, the information related to terminating the performance of the UWB communication may include a first GPIO that has been set to the second value (e.g., "low").

For example, the first communication circuit 310 may resume transmission and reception operations of the wireless LAN communication when the information related to terminating the performance of the UWB communication is received (812).

According to one embodiment, when the first coexistence method is activated, the first communication circuit 310 may selectively perform the operation corresponding to the first coexistence method based on the performance of the UWB communication in the second communication circuit 320.

According to one embodiment, when the UWB communication is terminated, the second communication control module 304 may transmit UWB communication termination-related information (e.g., coex request = 0) 820 to the first communication control module 302. The first communication control module 302 may determine whether to terminate the coexistence operation of the wireless LAN communication and the UWB communication, based on the UWB communication method termination-related information. When it is determined that the coexistence operation of the wireless LAN communication and the UWB communication is to be terminated, the first communication control module 302 may transmit coexistence operation termination acceptance information (e.g., accept or ACK) 822 to the second communication control module 304.

For example, the first communication control module 302 may transmit information related to the termination of the coexistence operation of the wireless LAN communication and the UWB communication to the first communication circuit 310. Based on the information related to the termination of the coexistence operation, the first communication circuit 310 may deactivate (or stop) performing the operation corresponding to the first coexistence method.

For example, the second communication control module 304 may transmit coexistence termination information to the second communication circuit 320 based on the coexistence operation termination acceptance information (e.g., accept) 822. The second communication circuit 320 may deactivate (or stop) the transmission of the information related to performing or terminating performance of the UWB communication based on the coexistence termination information.

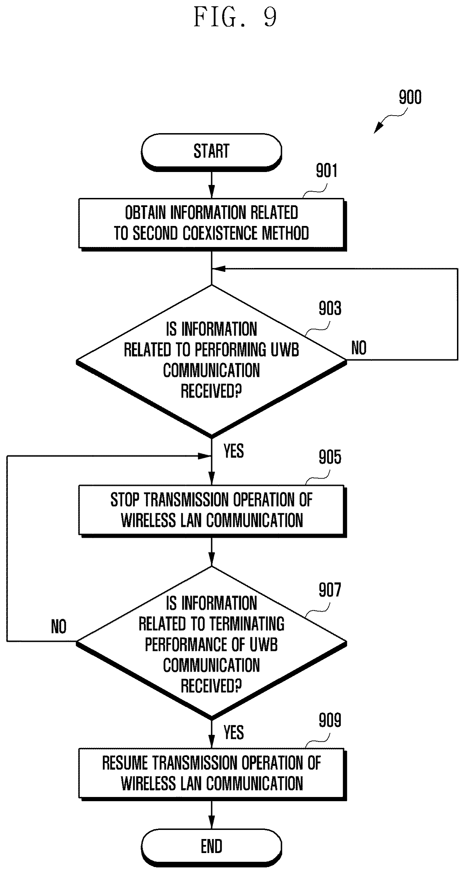

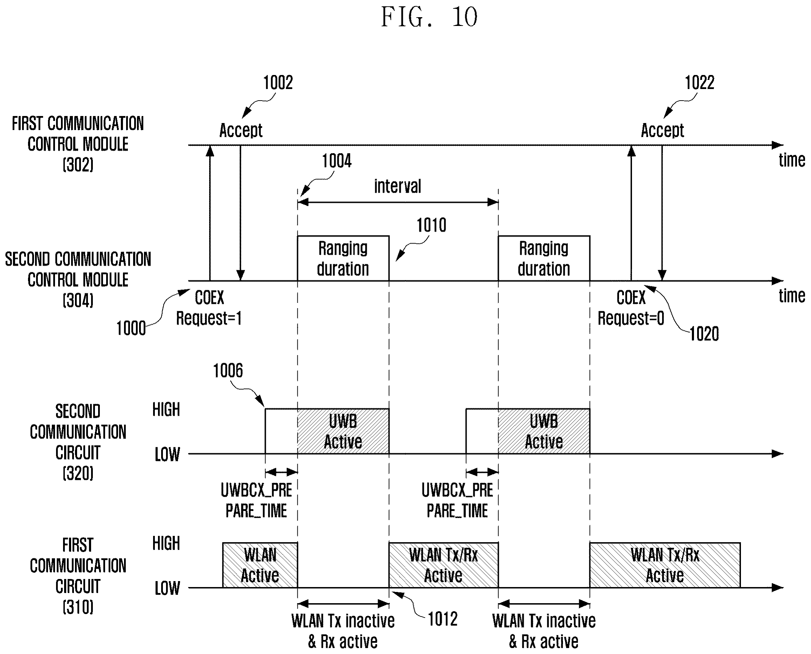

FIG. 9 is a flowchart 900 of performing multiple communications based on a second coexistence method in an electronic device according to one embodiment. In one example, at least some operations in FIG. 9 may include a detailed operation of operation 509 in FIG. 5 or operation 613 in FIG. 6. In the following embodiments, operations may each be performed sequentially, but are not necessarily performed sequentially. For example, the order of the operations may be changed, and at least two operations may be performed in parallel. In one example, the electronic device 101 in FIG. 9 may be the electronic device 101 in FIG. 1, 2, or 3. In one example, at least some operations in FIG. 9 may be described with reference to FIG. 10. FIG. 10 illustrates an example of performing multiple communications based on the second coexistence method in an electronic device according to one embodiment.

According to one embodiment, referring to FIGS. 9 and 10, an electronic device (e.g., the electronic device 101 in FIG. 1, 2, or 3) or a first communication circuit (e.g., the wireless communication module 192 in FIG. 1 or the first communication circuit 310 in FIG. 3) may obtain information related to a second coexistence method (or a second wireless LAN control method) in operation 901. For example, the second communication control module 304 may transmit a coexistence request signal (e.g., coex request = 1) 1000 to the first communication control module 302 when performing UWB communication. The first communication control module 302 may determine whether to perform a coexistence operation of wireless LAN communication and the UWB communication, based on the coexistence request signal received from the second communication control module 304. When it is determined that the coexistence operation of the wireless LAN communication and the UWB communication is to be performed, the first communication control module 302 may transmit coexistence acceptance information (e.g., accept) 1002 to the second communication control module 304. In one example, the coexistence request signal may include information related to the UWB communication.

For example, when it is determined that the coexistence operation of the wireless LAN communication and the UWB communication is to be performed, the first communication control module 302 may select a coexistence method of the wireless LAN communication and the UWB communication based on information related to the wireless LAN communication and the UWB communication. In one example, the first communication control module 302 may select a second coexistence method when an operation channel for the wireless LAN communication is adjacent to an operation channel for the UWB communication, and when an antenna related to the wireless LAN communication is adjacent to an antenna related to the UWB communication. In one example, the second coexistence method may be selected when an operation time of the UWB communication is less than or equal to a designated first reference time.

For example, the first communication control module 302 may transmit information related to the coexistence method (e.g., the second coexistence method) of the wireless LAN communication and the UWB communication to the first communication circuit 310. For example, the second communication control module 304 may transmit coexistence indication information to the second communication circuit 320 based on the coexistence acceptance information (e.g., accept) 1002.

According to one embodiment, in operation 903, the electronic device (e.g., the electronic device 101) or the first communication circuit (e.g., the wireless communication module 192 or the first communication circuit 310) may identify whether information related to performing the UWB communication is received. In one example, the information related to performing the UWB communication may include a first GPIO that has been set to a first value (e.g., "high") in FIG. 10.

According to one embodiment, when the information related to performing the UWB communication is not received (e.g., "No" in operation 903), the electronic device (e.g., the electronic device 101) or the first communication circuit (e.g., the wireless communication module 192 or the first communication circuit 310) may identify, in operation 903, whether the information related to performing the UWB communication is received. For example, when it is determined that the second communication circuit 320 is performing UWB communication, the first communication circuit 310 may continuously or periodically identify whether the information related to performing the UWB communication is received.

According to one embodiment, when the information related to performing the UWB communication is received (e.g., "Yes" in operation 903), the electronic device (e.g., the electronic device 101) or the first communication circuit (e.g., the wireless communication module 192 or the first communication circuit 310) may stop (or deactivate) a transmission operation of the wireless LAN communication in operation 905. For example, when the information related to the second coexistence method is received, the first communication circuit 310 may identify whether the information related to performing the UWB communication is received from the second communication circuit 320 during the performance of the wireless LAN communication.

For example, the second communication circuit 320 may transmit, based on reception of the coexistence indication information, the information related to performing the UWB communication to the first communication circuit 310 at a time point 1006 that precedes a start time point 1004 of the UWB communication (e.g., ranging) by a designated second reference time (e.g., UWBCX_PRERATE_TIME). In one example, the information related to performing the UWB communication may include the first GPIO that has been set to the first value (e.g., "high").

For example, when the information related to performing the UWB communication is received during the performance of the wireless LAN communication, the first communication circuit 310 may stop (or deactivate), based on the second coexistence method, the transmission operation of the wireless LAN communication. In one example, the first communication circuit 310 may stop, based on the second coexistence method, the transmission operation of the wireless LAN communication within a designated third reference time from the time point of receiving the information related to performing the UWB communication. In one example, a reception operation of the wireless LAN communication may be performed (or maintained) while the transmission operation of the wireless LAN communication is stopped based on the second coexistence method.

For example, the first communication circuit 310 may transmit information related to performing an operation corresponding to the second coexistence method to the second communication circuit 320. In one example, the information related to performing the operation corresponding to the second coexistence method may include a second GPIO that has been set to a second value (e.g., "low").

According to one embodiment, in operation 907, the electronic device (e.g., the electronic device 101) or the first communication circuit (e.g., the wireless communication module 192 or the first communication circuit 310) may identify whether information related to terminating the performance of the UWB communication is received.

According to one embodiment, when the information related to terminating the performance of the UWB communication is not received (e.g., "No" in operation 907), the electronic device (e.g., the electronic device 101) or the first communication circuit (e.g., the wireless communication module 192 or the first communication circuit 310) may maintain the stopping (or deactivating) of the transmission operation the wireless LAN communication in operation 905. For example, when the information related to terminating the performance of the UWB communication is not received while the transmission operation of the wireless LAN communication is stopped based on the second coexistence method, the first communication circuit 310 may determine that the UWB communication is in progress and may maintain the stopped state of the transmission operation of the wireless LAN communication.

According to one embodiment, when the information related to terminating the performance of the UWB communication is received (e.g., "Yes" in operation 907), the electronic device (e.g., the electronic device 101) or the first communication circuit (e.g., the wireless communication module 192 or the first communication circuit 310) may resume the transmission operation of the wireless LAN communication in operation 909. For example, the second communication circuit 320 may perform the UWB communication (e.g., ranging) based on the transmission of the information related to performing the UWB communication. In one example, the UWB communication may be performed when the designated third reference time elapses from the time point of transmitting the information related to performing the UWB communication. In one example, the UWB communication may be performed based on receiving the information related to performing the operation corresponding to the coexistence method from the first communication circuit 310.

For example, the second communication circuit 320 may transmit the information related to terminating the performance of the UWB communication to the first communication circuit 310 when an operation duration of the UWB communication (e.g., ranging) expires (1010). In one example, the information related to terminating the performance of the UWB communication may include a first GPIO that has been set to the second value (e.g., "low").

For example, the first communication circuit 310 may resume transmission operation of the wireless LAN communication when the information related to terminating the performance of the UWB communication is received (1012).

According to one embodiment, when the second coexistence method is activated, the first communication circuit 310 may selectively perform the operation corresponding to the second coexistence method based on the performance of the UWB communication in the second communication circuit 320.

According to one embodiment, when the UWB communication is terminated, the second communication control module 304 may transmit UWB communication termination-related information (e.g., coex request = 0) 1020 to the first communication control module 302. The first communication control module 302 may determine whether to terminate the coexistence operation of the wireless LAN communication and the UWB communication, based on the UWB communication method termination-related information. When it is determined that the coexistence operation of the wireless LAN communication and the UWB communication is to be terminated, the first communication control module 302 may transmit coexistence operation termination acceptance information (e.g., accept) 1022 to the second communication control module 304.

For example, the first communication control module 302 may transmit information related to the termination of the coexistence operation of the wireless LAN communication and the UWB communication to the first communication circuit 310. Based on the information related to the termination of the coexistence operation, the first communication circuit 310 may deactivate (or stop) performing the operation corresponding to the second coexistence method.

For example, the second communication control module 304 may transmit coexistence termination information to the second communication circuit 320 based on the coexistence operation termination acceptance information (e.g., accept or ACK) 1022. The second communication circuit 320 may deactivate (or stop) the transmission of the information related to performing or terminating performance of the UWB communication based on the coexistence termination information.

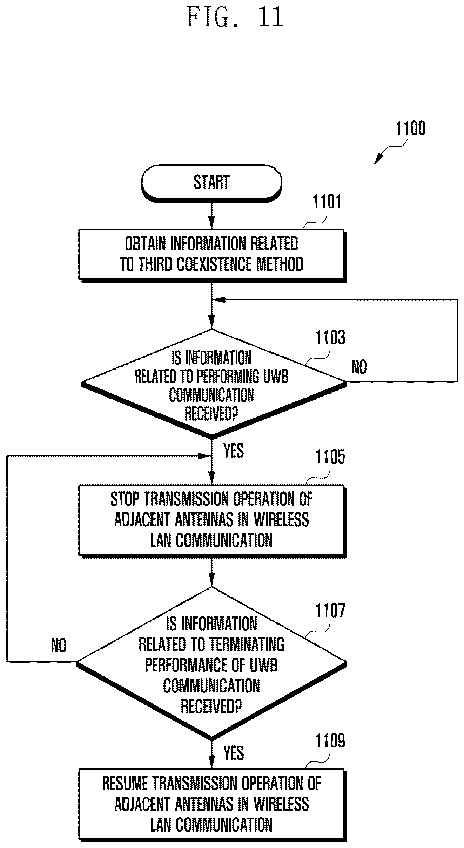

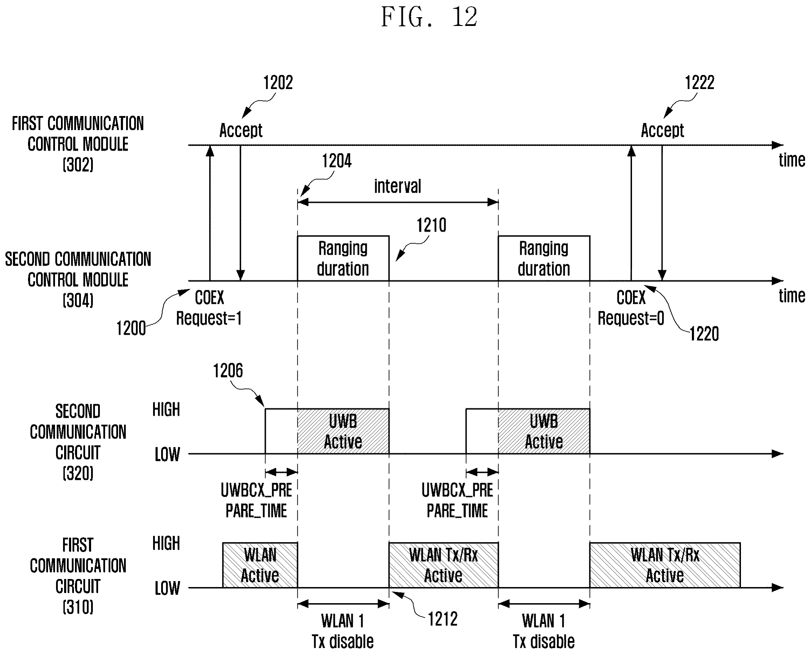

FIG. 11 is a flowchart 1100 of performing multiple communications based on a third coexistence method in an electronic device according to one embodiment. In one example, at least some operations in FIG. 11 may include a detailed operation of operation 509 in FIG. 5 or operation 615 in FIG. 6. In the following embodiments, operations may each be performed sequentially, but are not necessarily performed sequentially. For example, the order of the operations may be changed, and at least two operations may be performed in parallel. In one example, the electronic device 101 in FIG. 11 may be the electronic device 101 in FIG. 1, 2, or 3. In one example, at least some operations in FIG. 11 may be described with reference to FIG. 12. FIG. 12 illustrates an example of performing multiple communications based on the third coexistence method in an electronic device according to one embodiment.

According to one embodiment, referring to FIGS. 11 and 12, an electronic device (e.g., the electronic device 101 in FIG. 1, 2, or 3) or a first communication circuit (e.g., the wireless communication module 192 in FIG. 1 or the first communication circuit 310 in FIG. 3) may obtain information related to a third coexistence method (or a third wireless LAN control method) in operation 1101. For example, the second communication control module 304 may transmit a coexistence request signal (e.g., coex request = 1) 1200 to the first communication control module 302 when performing UWB communication. The first communication control module 302 may determine whether to perform a coexistence operation of wireless LAN communication and the UWB communication, based on the coexistence request signal received from the second communication control module 304. When it is determined that the coexistence operation of the wireless LAN communication and the UWB communication is to be performed, the first communication control module 302 may transmit coexistence acceptance information (e.g., accept) 1202 to the second communication control module 304. In one example, the coexistence request signal may include information related to the UWB communication.

For example, when it is determined that the coexistence operation of the wireless LAN communication and the UWB communication is to be performed, the first communication control module 302 may select a coexistence method of the wireless LAN communication and the UWB communication based on information related to the wireless LAN communication and the UWB communication. In one example, the first communication control module 302 may select a third coexistence method when an operation channel for the wireless LAN communication is adjacent to an operation channel for the UWB communication, and when an antenna related to the wireless LAN communication is adjacent to an antenna related to the UWB communication. In one example, the third coexistence method may be selected when an operation time of the UWB communication exceeds a designated first reference time.

For example, the first communication control module 302 may transmit information related to the coexistence method (e.g., the third coexistence method) of the wireless LAN communication and the UWB communication to the first communication circuit 310. For example, the second communication control module 304 may transmit coexistence indication information to the second communication circuit 320 based on the coexistence acceptance information (e.g., accept) 1202.

According to one embodiment, in operation 1103, the electronic device (e.g., the electronic device 101) or the first communication circuit (e.g., the wireless communication module 192 or the first communication circuit 310) may identify whether information related to performing the UWB communication is received. In one example, the information related to performing the UWB communication may include a first GPIO that has been set to a first value (e.g., "high") in FIG. 12.

According to one embodiment, when the information related to performing the UWB communication is not received (e.g., "No" in operation 1103), the electronic device (e.g., the electronic device 101) or the first communication circuit (e.g., the wireless communication module 192 or the first communication circuit 310) may identify, in operation 1103, whether the information related to performing the UWB communication is received. For example, when it is determined that the second communication circuit 320 is performing UWB communication, the first communication circuit 310 may continuously or periodically identify whether the information related to performing the UWB communication is received.

According to one embodiment, when the information related to performing the UWB communication is received (e.g., "Yes" in operation 1103), the electronic device (e.g., the electronic device 101) or the first communication circuit (e.g., the wireless communication module 192 or the first communication circuit 310) may stop (or deactivate), in operation 1105, transmission operations of the wireless LAN communication using at least some antennas among multiple antennas related to the wireless LAN communication. For example, when the information related to the third coexistence method is received, the first communication circuit 310 may identify whether the information related to performing the UWB communication is received from the second communication circuit 320 while the wireless LAN communication is in progress.

For example, the second communication circuit 320 may transmit, based on reception of the coexistence indication information, the information related to performing the UWB communication to the first communication circuit 310 at a time point 1206 that precedes a start time point 1204 of the UWB communication (e.g., ranging) by a designated second reference time (e.g., UWBCX_PRERATE_TIME). In one example, the information related to performing the UWB communication may include the first GPIO that has been set to the first value (e.g., "high").

For example, when the information related to performing the UWB communication is received during the performance of the wireless LAN communication, the first communication circuit 310 may stop (or deactivate), based on the third coexistence method, transmission operations of the wireless LAN communication using at least some antennas among multiple antennas activated to the wireless LAN communication. While a transmission operation of the wireless LAN communication using at least one antenna is deactivated based on the third coexistence method, the first communication circuit 310 may perform (or maintain) at least one of a reception operation of the wireless LAN communication using the multiple antennas or a transmission operation of the wireless LAN communication using the remaining antennas, other than the at least one antenna, among the multiple antennas. In one example, the first communication circuit 310 may perform an operation corresponding to the third coexistence method within a designated third reference time from the time point of receiving the information related to performing the UWB communication. In one example, the at least some antennas may include an antenna, which is adjacent to at least one antenna associated with the second communication method, among the multiple antennas associated with the wireless LAN communication.

For example, the first communication circuit 310 may transmit information related to performing the operation corresponding to the third coexistence method to the second communication circuit 320. In one example, the information related to performing the operation corresponding to the third coexistence method may include a second GPIO that has been set to a second value (e.g., "low").

According to one embodiment, in operation 1107, the electronic device (e.g., the electronic device 101) or the first communication circuit (e.g., the wireless communication module 192 or the first communication circuit 310) may identify whether information related to terminating the performance of the UWB communication is received.

According to one embodiment, when the information related to terminating the performance of the UWB communication is not received (e.g., "No" in operation 1107), the electronic device (e.g., the electronic device 101) or the first communication circuit (e.g., the wireless communication module 192 or the first communication circuit 310) may maintain, in operation 1105, the stopped (or deactivated) state of the transmission operation the wireless LAN communication using the at least some antennas among the multiple antennas related to communication. For example, when the information related to terminating the performance of the UWB communication is not received, the first communication circuit 310 may determine that the UWB communication is in progress, and may maintain the operation corresponding to the third coexistence method.

According to one embodiment, when the information related to terminating the performance of the UWB communication is received (e.g., "Yes" in operation 1107), the electronic device (e.g., the electronic device 101) or the first communication circuit (e.g., the wireless communication module 192 or the first communication circuit 310) may resume, in operation 1109, the transmission operation of the wireless LAN communication using the at least some antennas among the multiple antennas related to the wireless LAN communication. For example, the second communication circuit 320 may perform the UWB communication (e.g., ranging) based on the transmission of the information related to performing the UWB communication. In one example, the UWB communication may be performed when the designated third reference time elapses from the time point of transmitting the information related to performing the UWB communication. In one example, the UWB communication may be performed based on receiving the information related to performing the operation corresponding to the coexistence method from the first communication circuit 310.

For example, the second communication circuit 320 may transmit the information related to terminating the performance of the UWB communication to the first communication circuit 310 when an operation duration of the UWB communication (e.g., ranging) expires (1210). In one example, the information related to terminating the performance of the UWB communication may include a first GPIO that has been set to the second value (e.g., "low").

For example, when the information related to terminating the performance of the UWB communication is received (1212), the first communication circuit 310 may resume the transmission operation of the wireless LAN communication using the at least some antennas among the multiple antennas related to the wireless LAN communication.

According to one embodiment, when the third coexistence method is activated, the first communication circuit 310 may selectively perform the operation corresponding to the third coexistence method based on the performance of the UWB communication in the second communication circuit 320.

According to one embodiment, when the UWB communication is terminated, the second communication control module 304 may transmit UWB communication termination-related information (e.g., coex request = 0) 1220 to the first communication control module 302. The first communication control module 302 may determine whether to terminate the coexistence operation of the wireless LAN communication and the UWB communication, based on the UWB communication method termination-related information. When it is determined that the coexistence operation of the wireless LAN communication and the UWB communication is to be terminated, the first communication control module 302 may transmit coexistence operation termination acceptance information (e.g., accept or ACK) 1222 to the second communication control module 304.

For example, the first communication control module 302 may transmit information related to the termination of the coexistence operation of the wireless LAN communication and the UWB communication to the first communication circuit 310. Based on the information related to the termination of the coexistence operation, the first communication circuit 310 may deactivate (or stop) performing the operation corresponding to the third coexistence method.

For example, the second communication control module 304 may transmit coexistence termination information to the second communication circuit 320 based on the coexistence operation termination acceptance information (e.g., accept) 1222. The second communication circuit 320 may deactivate (or stop) the transmission of the information related to performing or terminating performance of the UWB communication based on the coexistence termination information.

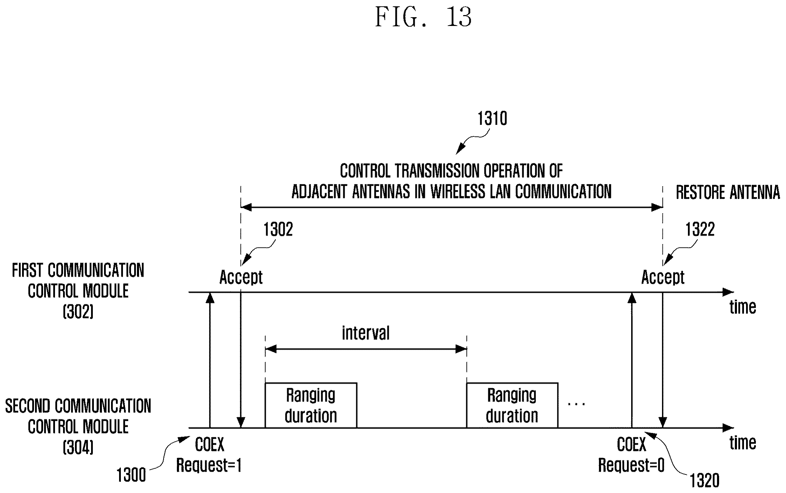

FIG. 13 illustrates an example of performing multiple communications based on a third coexistence method in an electronic device according to one embodiment.

According to one embodiment, referring to FIG. 13, the second communication control module 304 may transmit a coexistence request signal (e.g., coex request = 1) 1300 to the first communication control module 302 when performing UWB communication. The first communication control module 302 may determine whether to perform a coexistence operation of wireless LAN communication and the UWB communication, based on the coexistence request signal received from the second communication control module 304. When it is determined that the coexistence operation of the wireless LAN communication and the UWB communication is to be performed, the first communication control module 302 may transmit coexistence acceptance information (e.g., accept) 1302 to the second communication control module 304. In one example, the coexistence request signal may include information related to the UWB communication.

According to one embodiment, when it is determined that the coexistence operation of the wireless LAN communication and the UWB communication is to be performed, the first communication control module 302 may select a coexistence method of the wireless LAN communication and the UWB communication based on information related to the wireless LAN communication and the UWB communication. In one example, the first communication control module 302 may select a third coexistence method when an operation channel for the wireless LAN communication is adjacent to an operation channel for the UWB communication, and when an antenna related to the wireless LAN communication is adjacent to an antenna related to the UWB communication. In one example, the third coexistence method may be selected when an operation time of the UWB communication exceeds a designated first reference time.

According to one embodiment, the first communication control module 302 may transmit information related to the coexistence method (wireless LAN control method) (e.g., the third coexistence method) of the wireless LAN communication and the UWB communication to the first communication circuit 310. For example, the second communication control module 304 may transmit coexistence indication information to the second communication circuit 320 based on the coexistence acceptance information (e.g., accept) 1302.

According to one embodiment, the first communication circuit 310 may stop (or deactivate), based on the information related to the coexistence (e.g., the third coexistence method) of the wireless LAN communication and the UWB communication, transmission operations of the wireless LAN communication using at least some antennas among multiple antennas related to the wireless LAN communication. For example, the first communication circuit 310 may continuously perform an operation corresponding to the third coexistence method when the third coexistence method is activated (1310). While a transmission operation of the wireless LAN communication using at least one antenna is deactivated based on the third coexistence method, the first communication circuit 310 may perform (or maintain) at least one of a reception operation of the wireless LAN communication using the multiple antennas or a transmission operation of the wireless LAN communication using the remaining antennas, other than the at least one antenna, among the multiple antennas.

According to one embodiment, when the UWB communication is terminated, the second communication control module 304 may transmit UWB communication termination-related information (e.g., coex request = 0) 1320 to the first communication control module 302. The first communication control module 302 may determine whether to terminate the coexistence operation of the wireless LAN communication and the UWB communication, based on the UWB communication method termination-related information. When it is determined that the coexistence operation of the wireless LAN communication and the UWB communication is to be terminated, the first communication control module 302 may transmit coexistence operation termination acceptance information (e.g., accept) 1322 to the second communication control module 304.

For example, the first communication control module 302 may transmit information related to terminating the coexistence operation of the wireless LAN communication and the UWB communication to the first communication circuit 310. Based on the information related to the termination of the coexistence operation, the first communication circuit 310 may deactivate (or stop) performing the operation corresponding to the third coexistence method. In one example, the first communication circuit 310 may resume, based on the information related to the termination of the coexistence operation, the transmission operation of the wireless LAN communication using the at least some antennas among the multiple antennas related to the wireless LAN communication.

According to one embodiment, a method for operating an electronic device (e.g., the electronic device 101 in FIG. 1, 2, or 3) may include identifying an operation channel for wireless LAN communication. According to an embodiment, the method for operating the electronic device may include identifying an operation channel for UWB communication. According to an embodiment, the method for operating the electronic device may include deactivating, based on performing the UWB communication, a transmission operation in the wireless LAN communication using at least one antenna among multiple first antennas (e.g., the multiple antennas 400 in FIG. 4A or 4B) based on the UWB communication being activated and that the operation channels for the wireless LAN communication and the UWB communication being different.

According to one embodiment, the deactivating of the transmission operation in the wireless LAN communication may include deactivating, based on performance of the UWB communication in a second communication circuit supporting the UWB communication, the transmission operation in the wireless LAN communication using the at least one antenna among the multiple first antennas in a first communication circuit supporting the wireless LAN communication based on the UWB communication being activated and that the operation channels for the wireless LAN communication and the UWB communication being different.

According to an embodiment, the method for operating the electronic device may include determining, by the first communication circuit, that the second communication circuit is performing the UWB communication, based on information related to the performance of the UWB communication being received from the second communication circuit.

According to an embodiment, the method for operating the electronic device may include resuming, by the first communication circuit, the transmission operation in the wireless LAN communication using the at least one antenna among the multiple first antennas, based on information related to operation termination of the UWB communication being received from the second communication circuit.

According to an embodiment, the method for operating the electronic device may include resuming the transmission operation using the at least one antenna among the multiple first antennas based on the UWB communication being terminated.

Various embodiments disclosed in the specification and the drawings are merely particular examples provided for easily describing the technical matters according to the embodiments of the disclosure and contributing to understanding embodiments of the disclosure, and do not limit the scope of embodiments of the disclosure. Therefore, it should be construed that all modifications or modified forms capable of being derived from the technical idea of an embodiment of the disclosure in addition to the embodiments disclosed herein are included in the scope of an embodiment of the disclosure.

## Claims

1. An electronic device (101) comprising:
a first communication circuit (310) configured to perform wireless LAN communication via multiple first antennas (400);
a second communication circuit (320) configured to perform ultra-wideband (UWB) communication via multiple second antennas (410);
at least one processor (300) including processing circuitry; and
a memory (330) configured to store instructions which, when executed by the at least one processor individually or collectively, cause the electronic device (101) to:
identify an operation channel for the wireless LAN communication performed by the first communication circuit (310);
identify an operation channel for the UWB communication performed by the second communication circuit (320); and
control the first communication circuit to deactivate, based on the UWB communication, a transmission operation in the wireless LAN communication using at least one antenna among the multiple first antennas based on the UWB communication being activated and that the operation channels for the wireless LAN communication and the UWB communication being different.

2. The electronic device of claim 1, wherein the transmission operation in the wireless LAN communication using the at least one antenna among the multiple first antennas is deactivated while a reception operation in the wireless LAN communication using the at least one antenna among the multiple first antennas is activated.

3. The electronic device of claim 2, wherein the multiple first antennas comprise a first wireless LAN antenna, and a second wireless LAN antenna disposed such that a distance between the second wireless LAN antenna and a UWB antenna being used for the UWB communication among the multiple second antennas is greater than a distance between the first wireless LAN antenna and the UWB antenna, and
wherein the at least one antenna in which the transmission operation is deactivated corresponds to the first wireless LAN antenna.

4. The electronic device of one of claims 1 to 3, wherein at least one remaining antenna, other than the at least one antenna, among the multiple first antennas, is configured to maintain a transmission operation in the wireless LAN communication while the transmission operation in the wireless LAN communication using the at least one antenna is deactivated.

5. The electronic device of one of claims 1 to 4, wherein the memory (330) is configured to store instructions which, when executed by the at least one processor (300), individually and/or collectively, cause the electronic device (101) to transmit information related to controlling the wireless LAN communication to the first communication circuit based on the UWB communication being activated and that the operation channels for the wireless LAN communication and the UWB communication being different, and
wherein the first communication circuit is configured to deactivate, based on the performance of the UWB communication in the second communication circuit, the transmission operation in the wireless LAN communication using the at least one antenna among the multiple first antennas in case that the information related to controlling the wireless LAN communication is received.

6. The electronic device of one of claims 1 to 5, wherein the first communication circuit is configured to determine that the second communication circuit is performing the UWB communication, based on information related to the performance of the UWB communication being received from the second communication circuit while the information related to controlling the wireless LAN communication is received.

7. The electronic device of claim 6, wherein the first communication circuit is configured to resume the transmission operation in the wireless LAN communication using the at least one antenna among the multiple first antennas, based on information related to operation termination of the UWB communication being received from the second communication circuit while the transmission operation in the wireless LAN communication using the at least one antenna is deactivated.

8. The electronic device of claim 1, wherein the memory (330) is configured to store instructions which, when executed by the at least one processor (300), individually and/or collectively, cause the electronic device (101) to control the first communication circuit to resume the transmission operation using the at least one antenna among the multiple first antennas based on the UWB communication being terminated.

9. A method for operating an electronic device, the method comprising:
identifying an operation channel for wireless LAN communication;
identifying an operation channel for UWB communication; and
deactivating, based on performing the UWB communication, a transmission operation in the wireless LAN communication using at least one antenna among multiple first antennas based on the UWB communication being activated and that the operation channels for the wireless LAN communication and the UWB communication being different.

10. The method of claim 9, wherein the transmission operation in the wireless LAN communication using the at least one antenna among the multiple first antennas is deactivated while a reception operation in the wireless LAN communication using the at least one antenna among the multiple first antennas is activated.

11. The method of claim 10, wherein the multiple first antennas comprise a first wireless LAN antenna, and a second wireless LAN antenna disposed such that a distance between the second wireless LAN antenna and a UWB antenna being used for the UWB communication among multiple second antennas is greater than a distance between the first wireless LAN antenna and the UWB antenna, and
wherein the at least one antenna in which the transmission operation is deactivated corresponds to the first wireless LAN antenna.

12. The method of one of claims 9 to 11, wherein at least one remaining antenna, other than the at least one antenna, among the multiple first antennas is configured to maintain a transmission operation in the wireless LAN communication while the transmission operation in the wireless LAN communication using the at least one antenna is deactivated.

13. The method of one of claims 9 to 12, wherein the deactivating of the transmission operation in the wireless LAN communication comprises deactivating, based on performance of the UWB communication in a second communication circuit supporting the UWB communication, the transmission operation in the wireless LAN communication using the at least one antenna among the multiple first antennas in a first communication circuit supporting the wireless LAN communication based on the UWB communication being activated and that the operation channels for the wireless LAN communication and the UWB communication being different.

14. The method of one of claims 9 to 13, further comprising determining, by the first communication circuit, that the second communication circuit is performing the UWB communication, based on information related to the performance of the UWB communication being received from the second communication circuit.

15. The method of claim 14, further comprising resuming, by the first communication circuit, the transmission operation in the wireless LAN communication using the at least one antenna among the multiple first antennas, based on information related to operation termination of the UWB communication being received from the second communication circuit.
